# EUROPEAN PATENT SPECIFICATION

(11) **EP 1 977 552 B1**
(45) Date of publication and mention of the grant of the patent: **01.08.2012**
(21) Application number: 07762426.0
(22) Date of filing: 24.01.2007
(51) Int. Cl.: H04L 9/08, G07F 7/10, H04L 9/32

(54) **METHOD AND SYSTEM FOR PERSONALIZING SMART CARDS USING ASYMMETRIC KEY CRYPTOGRAPHY**
VERFAHREN UND SYSTEM ZUR PERSONALISIERUNG VON SMART CARDS MITHILFE DER ASYMMETRISCHEN SCHLÜSSELVERSCHLÜSSELUNG
PROCÉDÉ ET SYSTÈME DE PERSONALISATION DE CARTES À PUCE RECOURANT À LA CRYPTOGRAPHIE ASYMÉTRIQUE

(30) Priority: 24.01.2006 US 761982 P
(43) Date of publication of application: 08.10.2008
(73) Proprietor: Stepnexus, Inc., San Francisco, CA 94105 (US)
(72) Inventor: JOHNSON, Alan, E., Essex SS6 9RT (GB)
(74) Representative: Robson, Aidan John
(86) International application number: PCT/US2007/002165
(87) International publication number: WO 2007/087432

(56) References cited:
- EP-A1- 0 798 673
- EP-A2- 1 321 907
- GB-A- 2 337 145
- US-A1- 2002 040 936
- US-A1- 2005 091 501
- US-B2- 6 481 632
- Daniel Augot: "Chiffrement et signature" no. xp007912156, 31 December 2003 (2003-12-31), XP007912156 Retrieved from the Internet: URL:http://www-rocq.inria.fr/~augot/chiffr ement-signature.pdf> [retrieved on 2010-03-11]
- ISO: "7816 part 4: Interindustry command for interchange" INTERNATIONAL STANDARD ISO/IEC, XX, XX, vol. 7816, no. 4, 1 September 1995 (1995-09-01), pages 1-73, XP002169265
- ISO: "ISO/IEC 7816-8:2004 IDENTIFICATION CARDS -- INTEGRATED CIRCUIT CARDS - PART 8: COMMANDS FOR SECURITY OPERATIONS" INTERNATIONAL STANDARD ISO/IEC, XX, XX, vol. 7816, no. 8, 1 June 2004 (2004-06-01) , pages 1-19, XP008077623

## Description

### BACKGROUND OF THE INVENTION

### Field of the Invention

The present invention relates generally to personalizing smart cards or other devices containing a high-security semiconductor chip. More specifically, the present invention relates to systems and methods for personalizing smart cards using asymmetric key cryptography.

### Description of the Related Art

A smart card is typically a credit card-sized plastic card that includes a semiconductor chip capable of holding data, and potentially processing that data, to support one or more applications. Physically, a smart card often resembles a traditional credit card having one or more semiconductor devices attached to a module embedded in the card, which provides contacts to the outside world. The card can interface with a point-of-sale terminal, an ATM, or a card reader integrated into a telephone, a computer, a vending machine, and other similar appliances. A micro-controller semiconductor device embedded in a processor smart card allows the card to undertake a range of computational operations, such as protecting storage, encryption and decision making. Such a micro-controller typically includes a microprocessor, memory, and other functional hardware elements.

A cryptographic system, such as those typically used in conjunction with smart cards, is a system for sending a message from a sender to a receiver over a medium so that the message is secure, that is, so that only the intended receiver can recover the message. A cryptographic system converts the original message (e.g., text, graphics, data, combinations of these three, or any other digitized information and the like), referred to as "plaintext," into an encrypted format, known as "ciphertext." The encryption is generally accomplished by manipulating or transforming the message using a cipher key or keys. This process is typically referred to as enciphering. The receiver decrypts the encrypted message, that is, converts it from ciphertext back to plaintext, by reversing the manipulation or transformation process using the same cipher key or keys. This process is typically referred to as deciphering. So long as only the sender and receiver have knowledge of the cipher key, such an encrypted transmission is secure.

A classical cryptographic system, or cryptosystem, is one in which the enciphering information can be used to determine the deciphering information. To provide security, a classical cryptosystem requires that the enciphering key be kept secret and provided to users of the system over secure channels. Secure channels, such as secret couriers, secure telephone transmission lines, or the like, are often impractical and expensive.

A system that eliminates the difficulties of exchanging a secure enciphering key is known as public key encryption. With public key encryption, two keys are used, a private key and a public key. The keys are asymmetrical; that is, the public key is used to encipher a message and the private key is used to decipher a message. Public key encryption is typically used to encrypt the message making it unreadable by anyone unless they have the associated private key. Private Key encryption is typically used to create a publicly readable message with a secure digital signature that may be verified by any one with the associated public key.

Before a smart card is issued to an end user, or cardholder, the card typically goes through an initialization and a personalization process. During the initialization process, a manufacturer or other card supplier embeds an integrated circuit chip into the plastic card body. The chip is loaded with at least one application program, such as a credit application or a stored value application. In addition, a file structure may be initialized with default values, and initial cryptographic keys may be stored for transport security.

After a card is initialized, it is then typically personalized. During personalization, the smart card is generally loaded with data that uniquely identifies the card for that end user, and with data that allows the card to be used in a payment system, for example. Personalization data may include file information, application information, a maximum value for an application or of the card and a personal identification number (PIN) or other cardholder information. Also included may be the currency in which the card or application is valid, the expiration date of the card or application, and a variety of cryptographic keys and algorithm information for the card or applications on the card. For certain applications, cryptographic information to be loaded during personalization typically include not only a secret card key and derived keys, but also public key certificates.

Conventionally, the smart card is personalized at a personalization facility, often a third party contracted by a smart card issuer to personalize their smart cards. The personalization facility may be in a separate physical location from the card manufacturer or supplier and from the location of the smart card issuer. During personalization, a personalization device located at the personalization facility is coupled to a security module. The personalization device generally provides data which, when installed on a card, gives the card the ability to securely run application programs.

During personalization, cryptographic keys are typically stored in a memory of the initialized card. These keys are used for a variety of cryptographic purposes. Derived card keys are derived from master keys stored in the security module (of the personalization facility) using derivation data unique to each card. The derivation data is encrypted with a suitable algorithm using a master key to produce a derived card key for a particular card. The use of the master key to produce derived card keys obviates the need to have a unique key for every card in the system stored in terminals where applications are used. Instead, the master key can be used with derivation data from the card to independently regenerate the derived card key. This allows a terminal and a card to securely communicate with each other while the terminal only needs to hold a small number of master keys to communicate with a large number of cards in a system.

The personalization of smart cards typically requires the application provider and smart card to contain the same symmetric key values. This requires these keys to be created by one party and then securely transported between all the parties needing to know the keys - typically this may be the card manufacturer or supplier, the card issuer and one or more application providers. Each application provider is therefore, in part, reliant upon the security of other parties to hold safe these keys, when using these keys to encrypt his confidential data. A compromise of the keys by any party may compromise the confidential data of the card. As should be apparent, anyone knowing the key owner's secret key can pose as the key owner, read the key owner's messages and create or alter messages sent in the name of the key owner. Once a secret key is compromised, it can no longer serve its purposes ofmaking messages private.

Personalization often requires an online secured link to be established between the application on the smart card and the application provider (i.e., a secure channel). The secure channel is typically established through a "challenge and response" mechanism that requires (1) random numbers to be swapped, encrypted and verified by both parties, (2) the establishment of a session key, and (3) then secured communication of many personalization commands through the established secure channel. For the lifetime of a particular secure channel, it must be maintained and the resources of a security module hardware are required at the application provider. Such devices and systems are expensive and difficult to maintain, especially when always online.

Therefore, what is needed are security methods and systems for use with smart cards that do not require any party to share any confidential key material, while reducing the number of modules and systems to menage.
US2002/040936 discloses smart card architecture which includes a card manager which is able to deal with different applications. This card manager includes a number cryptographic keys in order to ensure key handling, encryption and signature are handled correctly. Applications of different types can be loaded including applications which require personalisation.
EP1321907 discusses various aspects relating to the issuance of cards but does not discuss the card features.

### SUMMARY

Certain embodiments of the present invention permit a smart card using Java Card™ technology, MULTOS™ technology or any other type of proprietary technology to be personalized in a secure manner, including through the use of using asymmetric cryptography. In certain embodiments, a plurality of keys are provided to the device including device-related keys, provider-specific keys, and transport keys. Personalization instructions can be directed to a selected application in the device. The selected application is typically identified and the personalization instructions can be encrypted using different ones of the plurality of keys.

In certain embodiments, keys specific to an application provider are furnished by the application provider and used to securely provide a personalization instruction to the device. The plurality of keys can also include transport keys used to secure the personalization instruction through encryption. In certain embodiments, the plurality of keys includes a device-specific secret key and a device-specific public key. In certain embodiments, the provision of personalization instructions can be accomplished using encryption to secure communication of the personalization instructions' The personalization instructions can be communicated with identifying information used to identify the personalization instructions by provider, device and target application on the device.

In certain embodiments, personalization instructions operate to configure an application on a personalized device. In certain embodiments, the personalization instructions can be executed on the device, whereby the personalization instruction configures data related to a targeted application. In certain embodiments, the personalized device comprises a processor, and non-volatile storage configured to maintain the plurality of keys, applications and personalized application-related data.

### BRIEF DESCRIPTION OF THE DRAWINGS

Aspects and features of the present invention will become apparent to those ordinarily skilled in the art from the following detailed description of embodiments of the invention in conjunction with the accompanying drawings, wherein:

Figure 1 illustrates a broad overview of methods and systems according to certain embodiments of the present invention;

Figure 2 illustrates the interaction between a platform key management authority and a smart card in relation to the asymmetric key pair according to certain embodiments of the present invention;

Figure 3 illustrates the interaction between the platform key management authority, the smart card and an application provider in relation to an application that requires personalization data according to certain embodiments of the present invention;

Figure 4 illustrates the application provider using the first personalization command and another key to create a message authentication code according to certain embodiments of the present invention;

Figure 5 illustrates an exemplary enciphering of a personalization according to certain embodiments of the present invention; and

Figure 6 illustrates methods and systems for personalization of a smart card according to certain embodiments of the present invention.

### DETAILED DESCRIPTION OF THE INVENTION

The present invention will now be described in detail with reference to the drawings, which are provided as illustrative examples of the invention so as to enable those skilled in the art to practice the invention. Notably, the figures and examples below are not meant to limit the scope of the present invention. Where certain elements of the present invention can be partially or fully implemented using known components, only those portions of such known components that are necessary for an understanding of the present invention will be described, and detailed descriptions of other portions of such known components will be omitted so as not to obscure the invention. Further, the present invention encompasses present and future known equivalents to the components referred to herein by way of illustration.

In order to facilitate clarity of description, certain operations and methods are described in the context of one application, one personalization instruction, one provider and one smart card or other personalized device. However, it is contemplated that the techniques, methods and operations described can be used with plural providers, applications and personalization instructions and multiple personalized devices. Thus for example, an application selected from among plural applications can be addressed on one of a plurality of devices by multiple personalization instructions from more than one provider.

Certain embodiments of the present invention permit a smart card using Java Card™ technology, MULTOS™ technology or any other type of proprietary technology to be personalized in a secure way using asymmetric cryptography. A smart card can consist of, for example, a secure microcontroller implemented in hardware, firmware containing an operating system and/or Java Card Runtime Environment implementation, and volatile and non-volatile memory for the storage and processing of software programs or other executable code and their associated data.

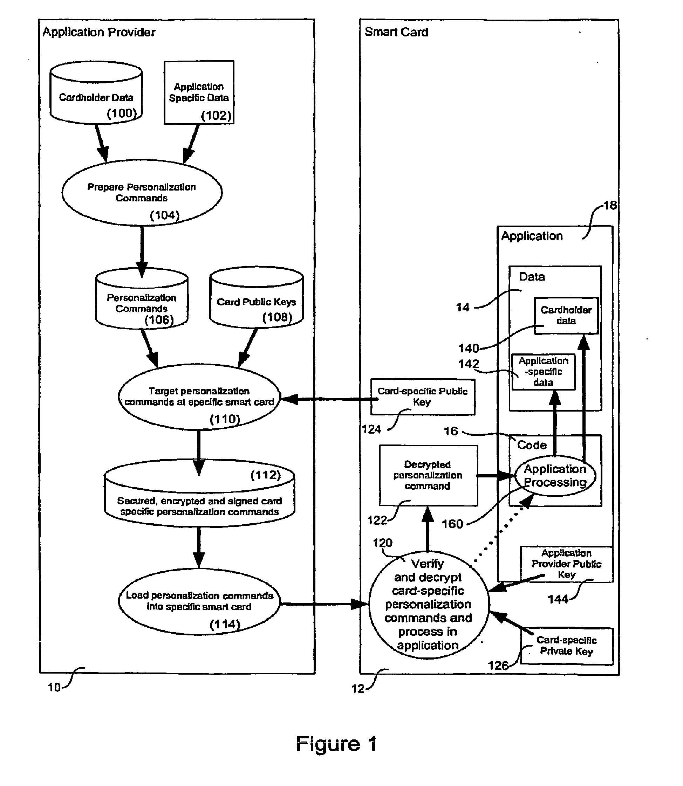

Figure 1 illustrates a broad overview of methods and systems according to certain embodiments of the present invention.

According to certain embodiments of the present invention, executable code can be loaded into non-volatile memory of the smart card without any mechanism to secure the code or using cryptographic mechanisms to secure the code. The executable code 16 of the application 18 may use any type run-time environment technology, for example Java Card™, MULTOS™, a proprietary technology, and the like. The term application shall be used for the purposes of description within this document, but is not meant to limit the type of executable code that can be loaded onto the smart card.

Following loading, data 14 to be used by the application, such as, for example, the personalization data, can be passed to the application. Data 14 may include information that is, at least partially unique to an end user or cardholder 140 as well as application-specific data 142 and sensitive cryptographic key data that may remain confidential. Accordingly, data 14 can be passed to the application from its source (e.g., an application provider, etc.) in an encrypted form. Typical methods use symmetric cryptographic mechanisms that rely upon shared symmetric key values to be known to both the smart card and the application provider.

Certain embodiments of the present invention permit smart card personalization data to be encrypted using an asymmetric cryptographic mechanism, which does not require the application provider to have prior knowledge of any symmetric key values.

Further, certain embodiments of the present invention permit an asymmetric cryptographic public key, for example, an application provider public key 144 (AP_PK), to be associated with the loaded application 18. This public key 144 can be loaded into the smart card 12 for the purpose of verifying data passed to the smart card 12 in order to personalize the application 18. Any available mechanism suitable for loading the key into the smart card 12 and associating it with the application 18 can be accommodated by aspects of the present invention.

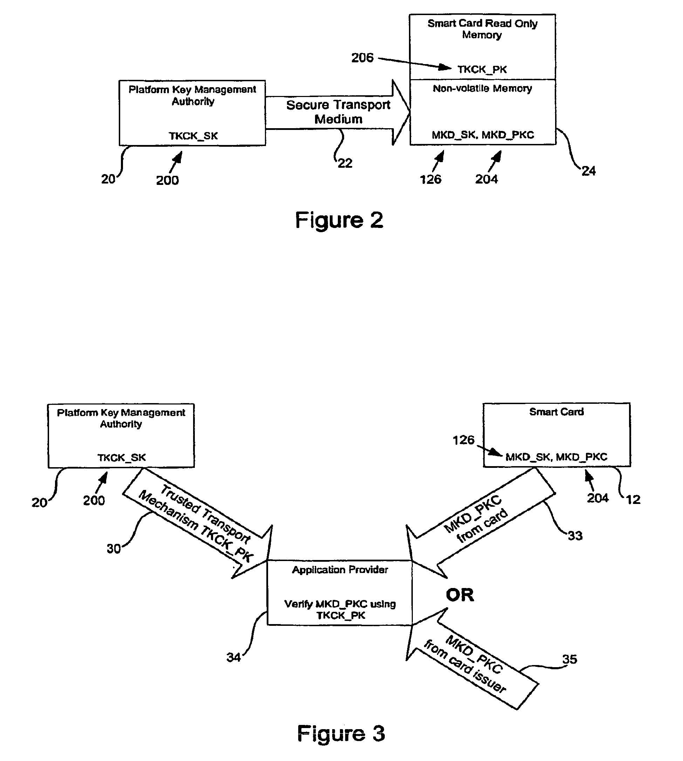

Referring also to Figure 2, the interaction between a platform key management authority 20 and a smart card 12 in relation to an asymmetric key pair according to certain embodiments of the present invention is now described. In certain embodiments of the present invention, smart card 12 (MCD) can maintain an asymmetric key pair, including a public key 124 (MKD_PK) and a private key 126 (MKD_SK). The public key 124 can be stored in the form of a public key certificate 204 (MKD_PKC), typically in storage 24 on the smart card 12. The digital signature contained within this certificate can be created by platform key management authority 20 (KMA) using a KMA transport key certifying private key 200 (TKCK_SK). A corresponding public key 206 (TKCK_PK) may be used to verify the public key certificate 204 of any particular smart card 12. Any available mechanism suitable for providing a secure transport medium 22 for loading the keys into the smart card can be accommodated by aspects of the present invention. Certain embodiments may include additional certificates between the MKD_PKC 204 and a certificate that is certified by TKCK_SK200.

Referring now also to Figure 3, an example is described that includes interaction between platform key management authority 20, smart card 12 and an application provider 10 in relation to an application that requires personalization data according to certain embodiments of the present invention. Application provider 10 receives (33) the MKD_PKC 204 of a particular target smart card 12 which includes an application that requires personalization data. The application provider 10 verifies the MKD_PKC 204 using the TKCK_PK 206 that has been obtained via a trusted route 30 directly from KMA 20, thus allowing application provider 10 to rely upon the validity of the smart card's MKD_PK 124. If a certificate chain were present, the chain of certificates could be verified, for example, with the top-most certificate verified by TKCK_PK 206.

The application provider 10 prepares the personalization data (104, Figure 1). Applications are typically personalized using specific personalization commands that are proprietary to the application. The application provider 10 can prepare personalization commands 106 intended for a specific application based on cardholder or card related data 100 and application specific data 102.

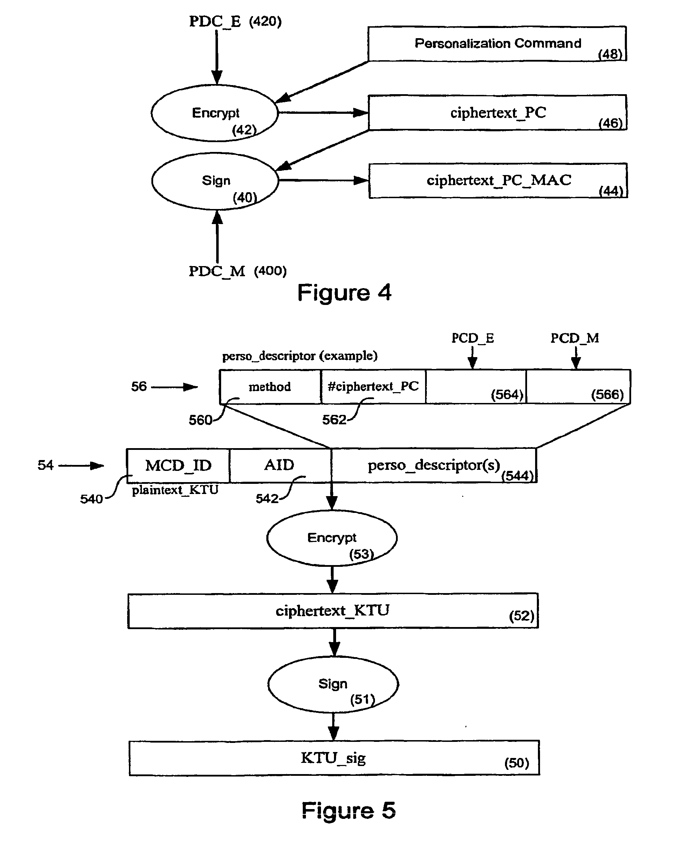

Figure 4 illustrates an example of a process in which application provider 10 uses a first personalization command 48 and a key to create a message authentication code according to certain embodiments of the present invention. The application provider 10 may maintain a repository of keys 108 associated with a plurality of smart cards 12. In certain embodiments of the invention, the application provider 10 creates a cryptographic key 420 (PDC_E) can be used for encryption (at 42) of the first personalization command 48 and another key 400 (PDC_M) that can be used to create a message authentication code 44 (MAC) at 40 to facilitate the integrity of the encrypted personalization command. These keys may be symmetric keys or asymmetric keys. The application provider 10 can insert information regarding the key algorithm used for encrypting and signing the first personalization command into a data structure called the personalization command descriptor (perso_descriptor). The application provider 10 can then encrypt (42) and sign (40) the first personalization command 48 to obtain ciphertext_PC 46 and ciphertext_PC_MAC 44.

In certain embodiments of the invention, the application provider 10 may encrypt (110) subsequent personalization commands 106 using the same keys, different keys or keys based on the preceding keys. Alternatively, a subsequent personalization command can be encrypted and signed using a different method, for example, using a different cryptographic algorithm, key values, or various combinations of key values and algorithms. Each subsequent personalization command can then be encoded into another perso_descriptor, resulting in another ciphertext_PC.

Figure 5 illustrates an example of enciphering a perso_descriptor according to certain embodiments of the present invention. After all desired personalization commands have been encrypted and signed, there can be one or many associated perso_descriptors 544. In certain embodiments of the invention, the various perso_descriptors 544 can be formatted into a data structure called the plaintext_KTU 54. The application provider 10 can insert an application identification (AID) 542 into the plaintext_KTU 54. The AID 542 identifies the intended on-card application targeted to be personalized and is typically inserted into plaintext_KTU 54 to facilitate matching the proper personalization commands to the proper application. The application provider 10 can also insert the MCD_ID 540 of the intended smart card to be personalized into the plaintext_KTU 54, to help prevent sending of the personalization commands to the wrong smart card. The plaintext_KTU 54 can be encrypted at 53 using the public key 124 (MKD_PK) of the target smart card to obtain ciphertext_KTU 52 which can ensure the confidentiality of the keys used to encrypt the personalization commands, and helps ensure that only the target smart card may decrypt these keys.

In certain embodiments, the application provider 10 can create a digital signature 50 (KTU_sig) of the ciphertext_KTU 52 (at 51) using an application provider private key (AP_SK). Aspects of the present invention facilitate the creation of the application provider key pair by any suitable and available means. Typically, the value of the application provider public key will have been previously loaded into, and verified by, the smart card 12. Aspects of the present invention facilitate mechanisms for loading and verifying this key.

In certain embodiments of the invention, the encrypted personalization commands, ciphertext_KTU 52 and KTU_sig 50 can be transported to the location where the data can be loaded into the smart card. This transportation does not require any security, as the personalization data is encrypted with a public key and may only be decrypted within the smart card containing a correct private key.

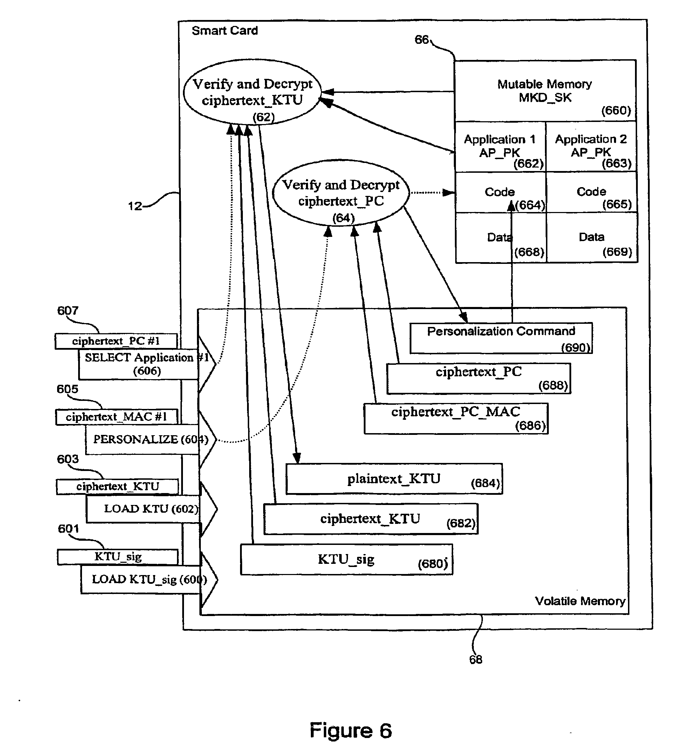

Figure 6 illustrates methods and systems for personalization of a smart card according to certain embodiments of the present invention. In certain embodiments, the application may be personalized by sending commands directly from personalization equipment such as a smart card reader, point of sale terminal, ATM or smart card printer/encoder or other such equipment. The application may also be personalized by sending commands via another already resident on-card application, such as, for example, a subscriber identity module application present in a smart card inserted within a mobile phone, or any other similar already resident on-card application that is capable of receiving personalization commands from the application provider 10. The personalization commands can be passed to the smart card platform from the on-card application by using an application program interface (API) provided by the smart card operating system. The method and security mechanism used to transport the personalization commands to this already resident on-card application can be proprietary to that application.

The application is thus personalized by first loading the ciphertext_KTU 603, 682 and KTU_sig 601, 680 to the smart card. The application is then selected at 606 - here Application 1 662 is identified (607).

A first personalization command containing ciphertext_PC 688 and command_MAC is loaded to the smart card 12. The smart card verifies at 62 the signature 680 (KTU_sig) of the ciphertext_KTU 682 using the previously loaded and verified application provider public key (AP_PK) 662. The smart card can then decrypt the genuine ciphertext_KTU 682 at 62 using its own MKD_SK 660. The recovered plaintext_KTU 684 is checked for integrity. In this situation, integrity can include checking to ensure that the personalization data is intended for this particular application by, for example, checking whether the AID 542 contained with the plaintext_KTU 684 matches that of the selected application.

Plaintext_KTU 684 can then be checked to see whether its internal structure is correct and that it contains valid perso_descriptors. The first personalization command 690, command_MAC, is verified using the key mechanism and key value specified in the first perso_descriptor. If valid, the ciphertext_PC 688 can then be decrypted using the key mechanism and key value specified in the first perso_descriptor. The first plaintext personalization command 690 is passed to the application 664, which is invoked for processing. The data passed in this command can be verified and stored by the application, at 668 for example.

In certain embodiments of the invention, an application may determine whether the personalization command 690 was verified and decrypted by the smart card 12 before being passed to the application by calling an application program interface (API) provided by the runtime environment. The application logic may choose to disallow a command that has not been verified and decrypted by the smart card 12.

The plaintext_KTU 684 can be retained within the volatile memory 68 of the smart card 12 after the first personalization command 690 has been processed so that subsequent commands may be loaded to the smart card 12.

In certain embodiments of the invention, subsequent personalization commands can be verified and decrypted according to the instructions encoded in the perso_descriptors stored within the retained plaintext_KTU 684. Many personalization commands can be required in order to complete the application's personalization. At any time, another ciphertext_KTU 603 and KTU_sig 601 can be loaded to the smart card 12. The next personalization command 605 would cause this new ciphertext_KTU 603 to be verified and decrypted and the personalization command 605 to be verified and decrypted according to new perso_descriptor contained within the new plaintext_KTU. Further personalization commands may be loaded to the smart card.

In certain embodiments of the invention, the plaintext_KTU 684 can be discarded **if** the application is deselected or if power to the smart card is removed.

### Additional Descriptions of Certain Aspects of the Inevntion

Certain embodiments of the invention provide a method for secure personalization of a device such as a smart card that comprises the steps of providing a plurality of keys to the device, providing one or more applications to the device, and providing a personalization instruction to the device. Typically, the keys include device-related keys, provider-specific keys, and transport keys, and the one or more applications and certain of the provider-specific keys are furnished by application providers. The personalization instruction can be secured using selected transport keys, typically provided by an application provider. In some embodiments, the device-related keys include a device-specific secret key and a device-specific public key.

In some embodiments, the personalization instruction operates to configure one of the one or more applications. In some embodiments, the method also comprises executing the personalization instruction on the device, whereby the personalization instruction configures data related to the one application. In some embodiments, the personalization instruction is encrypted using one of the transport keys. In some embodiments, the method also comprises providing the device with other personalization instructions, the other personalization instructions being encrypted using the one transport key. In some embodiments, the method also comprises creating a personalization descriptor, the personalization descriptor including the one transport key.

In some embodiments, the personalization instruction is digitally signed using one of the transport keys. In some embodiments, the method also comprises providing the device with other personalization instructions, the other personalization instructions being digitally signed using the one transport key. In some embodiments, the method also comprises creating a personalization descriptor, the personalization descriptor including the one transport key. In some embodiments, the method also comprises communicating a public key to a provider, whereby the public key is one of the device-related keys, identifying the device to the provider, and targeting an application in the one or more applications, whereby the targeted application is associated with the provider and the device. In some embodiments, the method also comprises the steps of encrypting the personalization instruction using a first transport key, digitally signing the personalization instruction using a second transport key. In some embodiments, creating a personalization descriptor, the personalization descriptor including the first and second transport keys.

In some embodiments, the method also comprises providing the device with other personalization instructions, the other personalization instructions being encrypted using first transport key and digitally signed using the second transport key. In some embodiments, the method also comprises deriving the first and second transport keys, and whereby the personalization descriptor identifies the device and the one application for configuration by the personalization instruction. In some embodiments, the device-related keys include a device-specific secret key and a device-specific public key, and the provider-specific keys include a provider-specific secret key and a provider-specific public key furnished by the provider of the one application. In some embodiments, the method also comprises encrypting the personalization descriptor using the device-specific public key, and obtaining a digital signature by digitally signing the encrypted personalization descriptor using the provider-specific secret key.

In some embodiments, the method also comprises receiving at the device, the encrypted personalization descriptor and the digital signature, verifying the digital signature using the provider-specific public key, decrypting the encrypted Personalization Descriptor using the device-specific secret key; and configuring the one application based on the personalization instruction and the personalization descriptor. In some embodiments, the step of configuring includes matching the personalization descriptor with the one application, and if matched, executing the personalization instruction. In some embodiments, the personalization instruction is encrypted using symmetric encryption. In some embodiments, the symmetric encryption is Triple DES or AES. In some embodiments, the device-specific secret key and the device-specific public key are provided using an asymmetric technique. In some embodiments, the asymmetric technique is RSA. In some embodiments, the personalization descriptor identifies an encryption technique used to implement the steps of encrypting and digitally signing. In some embodiments, the method also comprises providing the device with an additional personalization instruction directed to the one application, whereby the additional personalization instruction being furnished by a different provider. In some embodiments, the technique used to encrypt and digitally sign subsequent personalization instructions is the same as that of the first personalization instruction.

In some embodiments, the method also comprises providing the device with other personalization instructions, and the personalization instructions furnished by different providers operate to configure a targeted one of the one or more applications. In some embodiments, the plurality of keys includes certified public and secret keys furnished by a certification authority, and further comprises the steps of encrypting the provider-specific public key using a certified secret key to produce an provider-specific public key certificate, and signing the encrypted personalization descriptor using the provider-specific secret key to produce a digital signature. In some embodiments, the method also comprises verifying the provider-specific public key certificate with the certified public key. In some embodiments, the method also comprises deriving the provider-specific public key from the decrypted application provider's public key certificate and verifying the digital signature based on the derived provider-specific public key.

Furthermore, certain embodiments provide a personalized device comprising a processor, and non-volatile storage configured to maintain a plurality of keys, applications and personalized application-related data, whereby the data is personalized by one or more personalization instructions directed to one of the applications, and the one or more personalization instructions are secured using keys corresponding to the one application, the device and a provider. In some embodiments, the one or more personalization instructions include two or more personalization instructions directed to a targeted application and furnished by different providers. In some embodiments, the plurality of keys include a device-specific secret key and a device-specific public key. In some embodiments, each personalization instruction is executed on the personalized device, and each personalization instruction configures data related to the one application. In some embodiments, a first personalization instruction is secured by encryption based on a set of transport keys, whereby the plurality of keys includes a copy of the transport keys. In some embodiments, other personalization instructions are encrypted using the set of transport keys. In some embodiments, the set of transport keys is provided to the personalized device in a personalization descriptor. In some embodiments, a first personalization instruction is secured by a digital signature based on a set of the transport keys. other personalization instructions are digitally signed using the set of transport keys. In some embodiments, the set of transport keys is provided to the personalized device in a personalization descriptor. In some embodiments, a first personalization instruction is secured by encryption and a digital signature based on a set of transport keys, whereby the plurality of keys includes a copy of the transport keys. In some embodiments, other personalization instructions are secured using the set of transport keys. In some embodiments, the set of transport keys is provided to the personalized device in a personalization descriptor.

Certain embodiments of the invention provide methods for remotely personalizing an electronically addressable device that comprise providing one or more secured personalization instructions and a ciphertext_KTU to remote personalization equipment, decrypting the ciphertext_KTU to derive a data structure identifying the device and an application resident on the device, wherein the ciphertext_KTU is encrypted using a public cryptographic key associated with the device, decrypting the one or more secured personalization instructions based on information provided by the data structure, the information including a cryptographic key generated by an application provider, and executing the one or more instructions, wherein the step of execution configures the application resident on the device. In some embodiments, decrypting the ciphertext_KTU includes decrypting the ciphertext_KTU using a private key stored in the device. In some embodiments, decrypting the ciphertext_KTU includes matching a device identifier in the data structure with a device identifier stored in the device. In some embodiments, decrypting the ciphertext_KTU includes matching an application identifier in the data structure with an application identifier stored in the device and associated with the application resident on the device. In some embodiments, executing includes verifying a signature of the ciphertext_KTU using a verified application provider public key stored in the device. In some embodiments, the information includes a specification of an encryption mechanism and a cryptographic key value. In some embodiments, storing the decrypted data structure in the device.

Some embodiments further comprise providing additional secured personalization instructions to the remote personalization equipment, decrypting the additional secured personalization instructions based on information provided by the stored decrypted data structure and executing the additional instructions to further configure the identified application. In some embodiments, personalization equipment includes smart card readers, point of sale terminals, ATMs and smart card printers.

Although the present invention has been particularly described with reference to embodiments thereof, it should be readily apparent to those of ordinary skill in the art that various changes, modifications, substitutes and deletions are intended within the form and details thereof, without departing from the spirit and scope of the invention. Accordingly, it will be appreciated that in numerous instances some features of the invention will be employed without a corresponding use of other features. Further, those skilled in the art will understand that variations can be made in the number and arrangement of inventive elements illustrated and described in the above figures. It is intended that the scope of the appended claims include such changes and modifications.

## Claims

1. A method for secure personalization of an electronically addressable device (2), comprising the steps of:
maintaining a plurality of cryptographic keys (124, 126) on the devise,
providing the device with one or more applications, each application furnished by a provider:
communicating a personalization instruction 48 to the device, the personalization instruction being operative to configure a targeted application selected from the one or more applications,
wherein the communication of the personalization instruction is secured using selected ones of the plurality of cryptographic keys, including a provider-specific key (144) associated with an application provider, **characterised by** the steps of:
encrypting (42) the personalization instruction using a first transport key (420),
digitally signing (40) the personalization instruction using a second transport key (400)
creating a personalization descriptor, the personalization descriptor including the first and second transport keys, wherein
the first and second transport keys are provided by the application provider.

2. A method according to claim 1, wherein the plurality of cryptographic keys include a device-specific public key (124).

3. A method according to claim 1. and further comprising executing the personalization instruction on the device, wherein the personalization instruction configures data related to the targeted application.

4. A method according to claim 1, wherein the plurality of cryptographic keys includes a transport key used for extracting the personalization instruction, the transport key generated by the application provider for encrypting the personalization instruction.

5. A method according to claim 4, and further comprising providing the device with other personalization instructions, the other personalization instructions being encrypted using the transport key.

6. A method according to claim 4, and further comprising creating a personalization descriptor, the personalization descriptor including the transport key.

7. A method according to claim 1, wherein the plurality of cryptographic keys includes a transport key created by the application provider, and wherein the personalization instruction is digitally signed using the transport keys.

8. A method according to claim 7. and further comprising providing the device with other personalization instructions, the other personalization instructions being digitally signed using the transport key.

9. A method according to claim 7, and further comprising creating a personalization descriptor, the personalization descriptor including the transport key.

10. A method according to claim 1, wherein the personalization instruction is communicated responsive to the steps of:
communicating one or more of the plurality of cryptographic keys to the provider,
including a public key; and
identifying the device and the targeted application to the provider.

11. A method according to claim 1, further comprising the step of providing the device with other personalization instructions, the other personalization instructions being encrypted using the first transport key and digitally signed using the second transport key.

12. A method according to claim 1, and further comprising the step of deriving the first and second transport keys from the personalization descriptor, wherein the personalization descriptor identifies the device and the targeted application.

13. A method according to claim 12. wherein the plurality of cryptographic keys include a device-specific secret key and a device-specific public key. and wherein the provider-specific keys include a provider-specific secret key and a provider-specific public key furnished by the provider of the targeted application.

14. A method according to claim 13, and further comprising:
encrypting the personalization descriptor using the device-specific public key; and
obtaining a digital signature by digitally signing the encrypted personalization descriptor using the provider-specific secret key.

15. A method according to claim 14, and further comprising:
receiving at the device, the encrypted personalization descriptor and the digital signature:
verifying the digital signature using the provider-specific public key;
decrypting the encrypted personalization descriptor using the device-specific secret key: and
configuring the targeted application based on the personalization instruction and the personalization descriptor.

16. A method according to claim 15, wherein the step of configuring the targeted application includes
matching the personalization descriptor with the targeted application; and
if matched, executing the personalization instruction.

17. A method according to claim 5, wherein the personalization instruction is encrypted using symmetric encryption.

18. A method according to claim 1. wherein the device-specific secret key and the device-specific public key are provided using an asymmetric technique.

19. A method according to claim 11. wherein the personalization descriptor identifies an encryption technique used to implement the steps of encrypting and digitally signing.

20. A method according to claim 19, and further comprising communicating another personalized instruction to the device, the another personalization instruction being directed to the target application and furnished by a different provider.

21. A method according to claim 19, wherein one or more personalization instructions are encrypted and digitally signed using the same technique used to encrypt and digitally sign a previously communicated personalization instruction.

22. A method according to claim 11. further comprising communicating other personalization instructions to the device, the other personalization Instructions being operative to configure the targeted application and including at least one personalization instruction furnished by a different provider.

23. A method according to the claim 13, wherein the plurality of cryptographic keys includes certified public and secret keys furnished by a certification authority, and further comprising the steps of:
encrypting the provider-specific public key using a certified secret key to produce an provider-specific public key certificate; and
signing the encrypted personalization descriptor using the provider-specific secret key to produce a digital signature.

24. A method according to claim 23. and further comprising the step of verifying the provider-specific public key certificate with the certified public key.

25. A method according to claim 24. and further comprising the steps of:
deriving the provider-specific public key from a decrypted public key certificate associated with the provider; and
verifying the digital signature based on the derived provider-specific public key.

## Patentansprüche

1. Verfahren zum sicheren Personalisieren eines elektronisch adressierbaren Geräts (2), das die folgenden Schritte beinhaltet:
Führen mehrerer kryptografischer Schlüssel (124, 126) auf dem Gerät;
Bereitstellen von einer oder mehreren Anwendungen auf dem Gerät, wobei jede Anwendung von einem Anbieter geliefert wird;
Übermitteln eines Personalisierungsbefehls (48) an das Gerät, wobei der Personalisierungsbefehl bewirkt, dass eine der aus den ein oder mehreren Anwendungen ausgewählte gewünschte Anmeldung konfiguriert wird;
wobei die Übermittlung des Personalisierungsbefehls mit ausgewählten aus den mehreren kryptografischen Schlüsseln gesichert wird, einschließlich einem mit einem Anwendungsanbieter assoziierten anbieterspezifischen Schlüssel (144), **gekennzeichnet durch** die folgenden Schritte:
Verschlüsseln (42) des Personalisierungsbefehls mit einem ersten Transportschlüssel (420);
digitales Signieren (40) des Personalisierungsbefehls mit einem zweiten Transportschlüssel (400);
Erzeugen eines Personalisierungsdeskriptors, wobei der Personalisierungsdeskriptor den ersten und den zweiten Transportschlüssel beinhaltet, wobei
der erste und der zweite Transportschlüssel vom Anwendungsanbieter bereitgestellt werden.

2. Verfahren nach Anspruch 1, wobei die mehreren kryptografischen Schlüssel einen gerätespezifischen öffentlichen Schlüssel (124) beinhalten.

3. Verfahren nach Anspruch 1, das ferner das Ausführen des Personalisierungsbefehls auf dem Gerät beinhaltet, wobei der Personalisierungsbefehl Daten in Bezug auf die gewünschte Anwendung konfiguriert.

4. Verfahren nach Anspruch 1, wobei die mehreren kryptografischen Schlüssel einen Transportschlüssel beinhalten, der zum Extrahieren des Personalisierungsbefehls verwendet wird, wobei der Transportschlüssel vom Anwendungsanbieter zum Verschlüsseln des Personalisierungsbefehls erzeugt wird.

5. Verfahren nach Anspruch 4, das ferner das Senden anderer Personalisierungsbefehle zu dem Gerät beinhaltet, wobei die anderen Personalisierungsbefehle mit dem Transportschlüssel verschlüsselt werden.

6. Verfahren nach Anspruch 4, das ferner das Erzeugen eines Personalisierungsdeskriptors beinhaltet, wobei der Personalisierungsdeskriptor den Transportschlüssel enthält.

7. Verfahren nach Anspruch 1, wobei die mehreren kryptografischen Schlüssel einen vom Anwendungsanbieter erzeugten Transportschlüssel beinhalten und wobei der Personalisierungsbefehl mit den Transportschlüsseln digital signiert wird.

8. Verfahren nach Anspruch 7, das ferner das Bereitstellen anderer Personalisierungsbefehle für das Gerät beinhaltet, wobei die anderen Personalisierungsbefehle mit dem Transportschlüssel digital signiert werden.

9. Verfahren nach Anspruch 7, das ferner das Erzeugen eines Personalisierungsdeskriptors beinhaltet, wobei der Personalisierungsdeskriptor den Transportschlüssel enthält.

10. Verfahren nach Anspruch 1, wobei der Personalisierungsbefehl als Reaktion auf die folgenden Schritte übermittelt wird:
Übermitteln von einem oder mehreren aus der Mehrzahl von kryptografischen Schlüsseln zu dem Anbieter,
Einschließen eines öffentlichen Schlüssels; und
Identifizieren des Geräts und der gewünschten Anmeldung dem Anbieter.

11. Verfahren nach Anspruch 1, das ferner den Schritt des Bereitstellens von anderen Personalisierungsbefehlen für das Gerät beinhaltet, wobei die anderen Personalisierungsbefehle mit dem ersten Transportschlüssel verschlüsselt und mit dem zweiten Transportschlüssel digital signiert werden.

12. Verfahren nach Anspruch 1, das ferner den Schritt des Ableitens des ersten und zweiten Transportschlüssels von dem Personalisierungsdeskriptor beinhaltet, wobei der Personalisierungsdeskriptor das Gerät und die gewünschte Anwendung identifiziert.

13. Verfahren nach Anspruch 12, wobei die mehreren kryptografischen Schlüssel einen gerätespezifischen geheimen Schlüssel und einen gerätespezifischen öffentlichen Schlüssel beinhalten und wobei die anbieterspezifischen Schlüssel einen anbieterspezifischen geheimen Schlüssel und einen anbieterspezifischen öffentlichen Schlüssel beinhalten, der vom Anbieter der gewünschten Anmeldung geliefert wird.

14. Verfahren nach Anspruch 13, das ferner Folgendes beinhaltet:
Verschlüsseln des Personalisierungsdeskriptors mit dem gerätespezifischen öffentlichen Schlüssel; und
Einholen einer digitalen Signatur durch digitales Signieren des verschlüsselten Personalisierungsdeskriptors mit dem anwenderspezifischen geheimen Schlüssel.

15. Verfahren nach Anspruch 14, das ferner Folgendes beinhaltet:
Empfangen, an dem Gerät, des verschlüsselten Personalisierungsdeskriptors und der digitalen Signatur;
Überprüfen der digitalen Signatur mit dem anwenderspezifischen öffentlichen Schlüssel;
Entschlüsseln des verschlüsselten Personalisierungsdeskriptors mit dem gerätespezifischen geheimen Schlüssel; und
Konfigurieren der gewünschten Anwendung auf der Basis des Personalisierungsbefehls und des Personalisierungsdeskriptors.

16. Verfahren nach Anspruch 15, wobei der Schritt des Konfigurierens der gewünschten Anwendung Folgendes beinhaltet:
Vergleichen des Personalisierungsdeskriptors mit der gewünschten Anwendung; und
bei Übereinstimmung Ausführen des Personalisierungsbefehls.

17. Verfahren nach Anspruch 5, wobei der Personalisierungsbefehl mit symmetrischer Verschlüsselung verschlüsselt wird.

18. Verfahren nach Anspruch 1, wobei der gerätespezifische geheime Schlüssel und der gerätespezifische öffentliche Schlüssel mit einer asymmetrischen Technik bereitgestellt werden.

19. Verfahren nach Anspruch 11, wobei der Personalisierungsdeskriptor eine Verschlüsselungstechnik identifiziert, die zum Ausführen der Schritte des Verschlüsselns und digitalen Signierens benutzt wird.

20. Verfahren nach Anspruch 19, das ferner das Übermitteln eines anderen personalisierten Befehls zu dem Gerät beinhaltet, wobei der andere Personalisierungsbefehl auf die gewünschte Anwendung gerichtet ist und von einem anderen Anbieter geliefert wird.

21. Verfahren nach Anspruch 19, wobei ein oder mehrere Personalisierungsbefehle mit derselben Technik verschlüsselt und digital signiert werden, die zum Verschlüsseln und digitalen Signieren eines zuvor übermittelten Personalisierungsbefehls benutzt wird.

22. Verfahren nach Anspruch 11, das ferner das Übermitteln anderer Personalisierungsbefehle zu dem Gerät, wobei die anderen Personalisierungsbefehle bewirken, dass die gewünschte Anwendung konfiguriert wird, und das Einschließen wenigstens eines von einem anderen Anbieter gelieferten Personalisierungsbefehls beinhaltet.

23. Verfahren nach Anspruch 13, wobei die mehreren kryptografischen Schlüssel von einer Zertifizierungsstelle gelieferte zertifizierte öffentliche und geheime Schlüssel beinhalten, und das ferner die folgenden Schritte beinhaltet:
Verschlüsseln des anbieterspezifischen öffentlichen Schlüssels mit einem zertifizierten geheimen Schlüssel zum Erzeugen eines anbieterspezifischen öffentlichen Schlüsselzertifikats; und
Signieren des verschlüsselten Personalisierungsdeskriptors mit dem anbieterspezifischen geheimen Schlüssel, um eine digitale Signatur zu erzeugen.

24. Verfahren nach Anspruch 23, das ferner den Schritt des Überprüfens des anbieterspezifischen öffentlichen Schlüsselzertifikats mit dem zertifizierten öffentlichen Schlüssel beinhaltet.

25. Verfahren nach Anspruch 24, das ferner die folgenden Schritte beinhaltet:
Ableiten des anbieterspezifischen öffentlichen Schlüssels von einem mit dem Anbieter assoziierten entschlüsselten öffentlichen Schlüsselzertifikat; und
Überprüfen der digitalen Signatur auf der Basis des abgeleiteten anbieterspezifischen öffentlichen Schlüssels.

## Revendications

1. Procédé de personnalisation sécurisée d'un dispositif adressable électroniquement (2), comprenant les étapes consistant à :
maintenir une pluralité de clés de chiffrement (124, 126) sur le dispositif;
fournir une ou plusieurs applications au dispositif, chaque application fournie par un fournisseur;
communiquer une instruction de personnalisation (48) au dispositif, l'instruction de personnalisation étant opérationnelle pour configurer une application visée sélectionnée parmi l'une ou les plusieurs applications,
où la communication de l'instruction de personnalisation est sécurisée en utilisant des clés de chiffrement sélectionnées parmi la pluralité de clés de chiffrement, y compris une clé spécifique à un fournisseur (144) associée à un fournisseur d'application, **caractérisé par** les étapes consistant à :
chiffrer (42) l'instruction de personnalisation en utilisant une première clé de transport (420);
signer numériquement (40) l'instruction de personnalisation en utilisant une deuxième clé de transport (400);
créer un descripteur de personnalisation, le descripteur de personnalisation incluant la première et la deuxième clés de transport, où
la première et la deuxième clés de transport sont fournies par le fournisseur d'application.

2. Procédé, selon la revendication 1, dans lequel la pluralité de clés de chiffrement comprend une clé publique spécifique au dispositif (124).

3. Procédé selon la revendication 1, et comprenant en outre exécuter l'instruction de personnalisation sur le dispositif, où l'instruction de personnalisation configure des données associées à l'application visée.

4. Procédé selon la revendication 1, dans lequel la pluralité de clés de chiffrement comprend une clé de transport utilisée pour extraire l'instruction de personnalisation, la clé de transport étant générée par le fournisseur d'application pour chiffrer l'instruction de personnalisation.

5. Procédé selon la revendication 4, et comprenant en outre fournir d'autres instructions de personnalisation au dispositif, les autres instructions de personnalisation étant chiffrées en utilisant la clé de transport.

6. Procédé selon la revendication 4, et comprenant en outre créer un descripteur de personnalisation, le descripteur de personnalisation incluant la clé de transport.

7. Procédé selon la revendication 1, dans lequel la pluralité de clés de chiffrement comprend une clé de transport créée par le fournisseur d'application et dans lequel l'instruction de personnalisation est signée numériquement en utilisant les clés de transport.

8. Procédé selon la revendication 7, et comprenant en outre fournir d'autres instructions de personnalisation au dispositif, les autres instructions de personnalisation étant signées numériquement en utilisant la clé de transport.

9. Procédé selon la revendication 7, et comprenant en outre créer un descripteur de personnalisation, le descripteur de personnalisation comprenant la clé de transport.

10. Procédé selon la revendication 1, dans lequel l'instruction de personnalisation est communiquée en réponse aux étapes consistant à :
communiquer une ou plusieurs de la pluralité de clés de chiffrement au fournisseur,
incluant une clé publique; et
identifier le dispositif et l'application visée auprès du fournisseur.

11. Procédé selon la revendication 1, comprenant en outre l'étape consistant à fournir d'autres instructions de personnalisation au dispositif, les autres instructions de personnalisation étant chiffrées en utilisant la première clé de transport et signées numériquement en utilisant la deuxième clé de transport.

12. Procédé selon la revendication 1, et comprenant en outre l'étape consistant à obtenir la première et la deuxième clés de transport du descripteur de personnalisation, où le descripteur de personnalisation identifie le dispositif et l'application visée.

13. Procédé selon la revendication 12, dans lequel la pluralité de clés de chiffrement comprend une clé secrète spécifique au dispositif et une clé publique spécifique au dispositif et où les clés spécifiques au fournisseur comprennent une clé secrète spécifique au fournisseur et une clé publique spécifique au fournisseur fournies par le fournisseur de l'application visée.

14. Procédé selon la revendication 13, et comprenant en outre :
chiffrer le descripteur de personnalisation en utilisant la clé publique spécifique au dispositif; et
obtenir une signature numérique en signant numériquement le descripteur de personnalisation chiffré en utilisant la clé secrète spécifique au fournisseur.

15. Procédé selon la revendication 14, et comprenant en outre :
recevoir au dispositif, le descripteur de personnalisation chiffré et la signature numérique;
vérifier la signature numérique en utilisant la clé publique spécifique au fournisseur; et
configurer l'application visée sur la base de l'instruction de personnalisation et du descripteur de personnalisation.

16. Procédé selon la revendication 15, dans lequel l'étape consistant à configurer l'application visée comprend
adapter le descripteur de personnalisation à l'application visée; et
si adapté, exécuter l'instruction de personnalisation.

17. Procédé selon la revendication 5, dans lequel l'instruction de personnalisation est chiffrée en utilisant un chiffrement symétrique.

18. Procédé selon la revendication 1, dans lequel la clé secrète spécifique au dispositif et la clé publique spécifique au dispositif sont fournies en utilisant une technique asymétrique.

19. Procédé selon la revendication 11, dans lequel le descripteur de personnalisation identifie une technique de chiffrement utilisée pour exécuter les étapes consistant à chiffrer et à signer numériquement.

20. Procédé selon la revendication 19, et comprenant en outre communiquer une autre instruction personnalisée au dispositif, l'autre instruction personnalisée étant dirigée vers l'application visée et fournie par un fournisseur différent.

21. Procédé selon la revendication 19, dans lequel une ou plusieurs instructions de personnalisation sont chiffrées et signées numériquement en utilisant la même technique qu'utilisée pour chiffrer et signer numériquement une instruction de personnalisation communiquée précédemment.

22. Procédé selon la revendication 11, comprenant en outre communiquer d'autres instructions de personnalisation au dispositif, les autres instructions de personnalisation étant opérationnelles pour configurer l'application visée et comprennent au moins une instruction de personnalisation fournie par un fournisseur différent.

23. Procédé selon la revendication 13, dans lequel la pluralité de clés de chiffrement comprend des clés publiques et secrètes certifiées fournies par une autorité de certification, et comprenant en outre :
chiffrer la clé publique spécifique au fournisseur en utilisant une clé secrète certifiée pour fournir un certificat de clé publique spécifique au fournisseur; et
signer le descripteur de personnalisation chiffré en utilisant la clé secrète spécifique au fournisseur pour produire une signature numérique.

24. Procédé selon la revendication 23, et comprenant en outre l'étape consistant à vérifier le certificat de clé publique spécifique au fournisseur avec la clé publique certifiée.

25. Procédé selon la revendication 24, et comprenant en outre les étapes consistant à :
obtenir la clé publique spécifique au fournisseur d'un certificat de clé publique déchiffrée associé au fournisseur; et
vérifier la signature numérique sur la base de la clé publique spécifique au fournisseur obtenue.
